Europäisches Patentamt

**European Patent Office**

**Office européen des brevets**

(19)

(11) Numéro de publication: **0 232 191**
**A1**

(12)

# DEMANDE DE BREVET EUROPEEN

(21) Numéro de dépôt: **87400020.1**

(22) Date de dépôt: **07.01.87**

(51) Int. Cl.³: **G 02 C 7/06**

(30) Priorité: **08.01.86 FR 8600152**

(43) Date de publication de la demande:
**12.08.87 Bulletin 87/33**

(84) Etats contractants désignés:
**AT BE CH DE ES GB GR IT LI LU NL SE**

(71) Demandeur: **Capez, Pierre**
**196 Boulevard Bineau**
**F-92200 Neuilly sur Seine(FR)**

(72) Inventeur: **Capez, Pierre**
**196 Boulevard Bineau**
**F-92200 Neuilly sur Seine(FR)**

(74) Mandataire: **Madeuf, Claude Alexandre Jean et al,**
**CABINET MADEUF 3, avenue Bugeaud**
**F-75116 Paris(FR)**

(54) Procédé de fabrication de lentilles de contact multi-focales pour presbytes et lentilles de contact obtenues par ce procédé.

(57) Lentille de contact multifocale présentant une zone annulaire périphérique sphérique caractérisée en ce que la zone centrale multifocale pour la vision de près et la vision intermédiaire présente un bourrelet (5) sur la face interne (3) et/ou sur la face externe (2).

Fig.1

EP 0 232 191 A1

# Procédé de fabrication de lentilles de contact multi-focales pour presbytes et lentilles de contact obtenues par ce procédé.

La présente invention est relative aux lentilles de contact et se rapporte plus particulièrement aux lentilles multi-focales ayant comme caractéristique principale que la zone optique pour la vision de près se trouve au centre de ladite lentille, alors que la zone optique de la vision de loin se situe concentriquement en périphérie.

Selon la publication américaine "Contact Lens Practice", deuxième édition (1974, pages 659-660) ainsi que selon la publication américaine "Contact Lenses" de 1984, page 57.3, on a déjà envisagé de construire des lentilles de ce genre, mais lesdites publications ne font que poser le problème technique, sans pour autant suggérer une réalisation effective et techniquement valable. Aucune forme concrète de lentille n'a été indiquée dans ces publications et celles-ci ne divulguent nullement un procédé de fabrication permettant d'obtenir des lentilles ayant une performance optique satisfaisante.

Actuellement, l'état de la technique ne permet pas de résoudre avec satisfaction le problème posé par la réalisation de lentilles de contact destinées aux presbytes.

L'invention a donc recherché à définir une nouvelle géométrie et pour cela elle a opté pour la trépanation sur différents diamètres des lentilles souples, sphériques concaves. L'observation, lentille en place chez les myopes presbytes a permis de déterminer avec une relative précision le diamètre maximum de la trépanation permettant, en vision de loin, la neutralisation par le cortex de l'image parasite créée par la zone centrale de la lentille. On a également étudié le diamètre minimum de la partie centrale destinée à la vision de près sans amputer le champ de vision.

Sur la base de ces données on a façonné des lentilles bi-focales ayant au centre sur la face interne et/ou sur la face externe une zone de vision de près répartie sur une surface parfaitement définie. On s'est alors aperçu que la transition marquée entre les deux zones optiques perturbe la capacité naturelle de sélection du cortex ; de plus, le passage brutal de la vision de loin à la vision de près est difficilement accepté par le cerveau dans ces conditions.

On a alors essayé de façonner des lentilles ayant une surface optiquement dégressive du centre vers la périphérie en utilisant un artifice connu en la matière c'est-à-dire le réglage de l'axe de l'outil à couper par rapport à l'axe de la broche qui permet d'obtenir des surfaces plus ou moins sphériques à tendance ogive ou téton. Ce déréglage volontaire est d'ailleurs utilisé pour améliorer la qualité optique des lentilles aphaques fortement convexes en donnant une succession de focales dégressives du centre vers la périphérie.

Là encore les résultats optiques obtenus avec ces lentilles asphériques sur la totalité de leur surface interne et/ou externe ont été décevants. En effet, les images de vision loin se sont avérées particulièrement floues et fluctuantes.

Il a alors été décidé de réaliser des lentilles de contact dont la zone périphérique de vision de loin est sphérique et la zone de vision de près est asphérique, le passage entre les deux zones se faisant en douceur sans transition marquée. La correction centrale destinée à la vision de près peut être située soit sur la face interne soit sur la face externe ou si nécessaire conjointement sur la face interne et sur la face externe.

L'invention a permis de déterminer que le sujet porteur des lentilles en vision de loin peut ainsi neutraliser de façon naturelle l'image parasite créée par la zone centrale de vision de près. En vision de près, le myosis associé à la convergence favorise le passage par la petite zone de vision de près, et le cortex du sujet choisit, dans cette zone, la focale qui lui convient en fonction de ses besoins, quelque soit le degré de sa presbytie.

L'invention s'étend au procédé de fabrication qui consiste à générer sphériquement la partie sphérique de la face interne et/ou de la face externe de la lentille par pivotement de l'outil de coupe puis soit générer le bourrelet central par pivotement de la broche supportant le palet de matière servant à fabriquer la lentille, soit générer le bourrelet central par pivotement de l'outil à couper autour d'un second pivot. Les opérations restantes s'effectuent de manière traditionnelle.

On peut indiquer à titre d'exemple que ce procédé peut être mis en oeuvre par un tour pas-à-pas assisté par ordinateur car cette machine peut exécuter ces surfaces parfaitement définies par des courbes mathématiques.

A titre de variante on peut utiliser un procédé de moulage afin d'obtenir des surfaces identiques. Ce procédé de moulage s'adresse tout particulièrement à la variante de l'invention dont le bourrelet correspondant à la vision de près est situé exclusivement sur la face interne de la lentille.

Dans ce cas on limite volontairement les formes, donc les moules. Il suffit de surfacer un moule, correspondant à la contreforme interne de la lentille, servant à produire en série par moulage, dont la technique est parfaitement connue et utilisée aujourd'hui, des lentilles semi-finies par leur forme interne. Il ne reste plus qu'à façonner les faces externes de façon traditionnelle.

Conformément à l'invention, la lentille de contact multifocale présentant une zone annulaire périphérique, sphérique est caractérisée en ce que la zone centrale multifocale pour la vision de près et la vision intermédiaire présente un bourrelet sur la face interne et/ou sur la face externe.

Diverses autres caractéristiques de l'invention ressortent d'ailleurs de la description détaillée qui suit.

Des formes de réalisation de l'objet de l'invention sont représentées, à titre d'exemple non limitatif, aux dessins annexés.

La fig. 1 est un schéma montrant la réalisation d'une lentille selon l'invention.

La fig. 2 est un diagramme montrant la configuration de la face interne d'une lentille selon l'invention.

La fig. 3 est un diagramme montrant la configuration d'une variante de réalisation de la face interne d'une lentille selon l'invention.

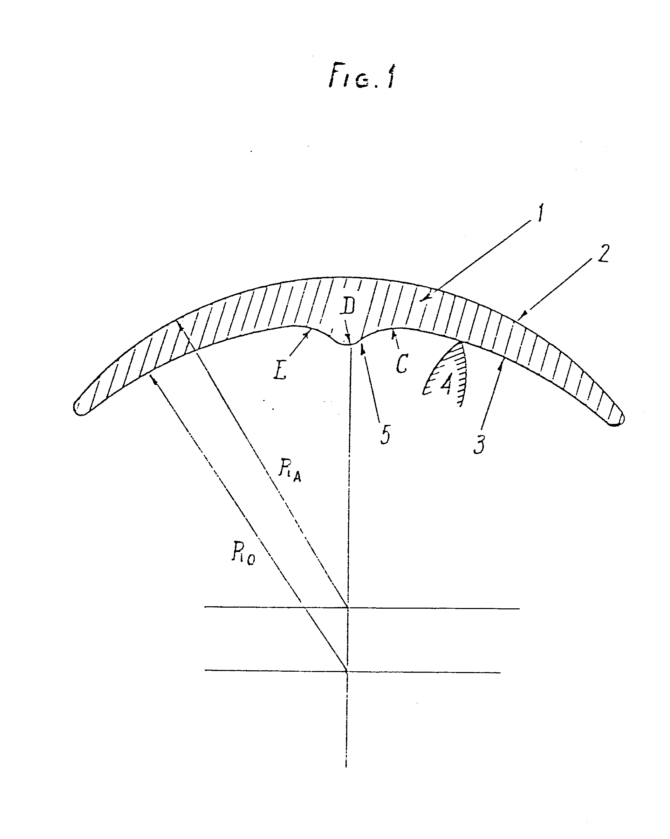

A la fig. 1, la lentille 1 comporte une face externe 2 et une face interne 3. Le bourrelet central 5 décrit plus haut est situé dans la zone définie par les lettres C D E et sa courbure peut varier en fonction des besoins de puissance pour la vision de près. La dimension CE du bourrelet 5 revêt une importance particulière et déterminante pour la sélection physiologique, effectuée par le cerveau, de la vision de près ou de loin. Ra représente le rayon de la face externe de la lentille et Ro le rayon de courbure principal  de la face interne. La pointe de l'outil de coupe est représentée en 4.

Pour des lentilles particulières, la forme peut être inversée, le bourrelet 5 étant prévu sur la face externe. Ro est alors le rayon de la face interne de la lentille et Ra est le rayon de courbure principale de la face externe. Le bourrelet 5 peut aussi être prévu à la fois sur la face interne et la face externe de la lentille et dans ce cas, Ro et Ra représentent tous deux le rayon de courbure principale des faces interne et externe.

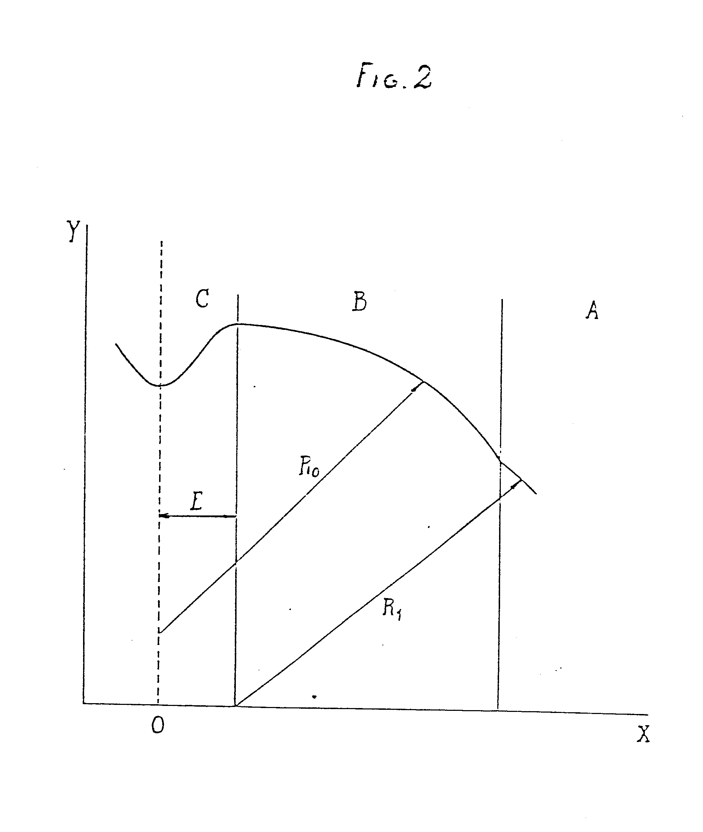

A la fig. 2, la courbe représente la configuration de la face interne qui comporte trois parties A  B  et  C. La partie A correspond à la "zone de dégagement" classique, répondant à la formule générale :

$$(X - \frac{E}{2})^2 + Y^2 = R_1^2$$

La partie B correspondant à la vision de loin répond à la formule générale :

$$X^2 + Y^2 = Ro^2$$

Dans ces formules X et Y définissent un système de coordonnées cartésiennes et E représente la longueur du bourrelet 5'. Ro est le rayon de courbure principal de la face correspondante de la lentille, et R1 est le rayon de la zone de dégagement.

La partie C correspondant à la zone de vision de près répond à la formule générale :

$$Y = \frac{1}{2}\sqrt{\sqrt{4Ro^2 - E^2} + \left(\frac{Ro - \frac{1}{2}\sqrt{4Ro^2 - E^2}}{\sin\left(\frac{E\widetilde{\pi}}{4}\right)}\right)\sin\left(\frac{\widetilde{\pi}}{2}\right)\left(X - \frac{E}{4}\right)}$$

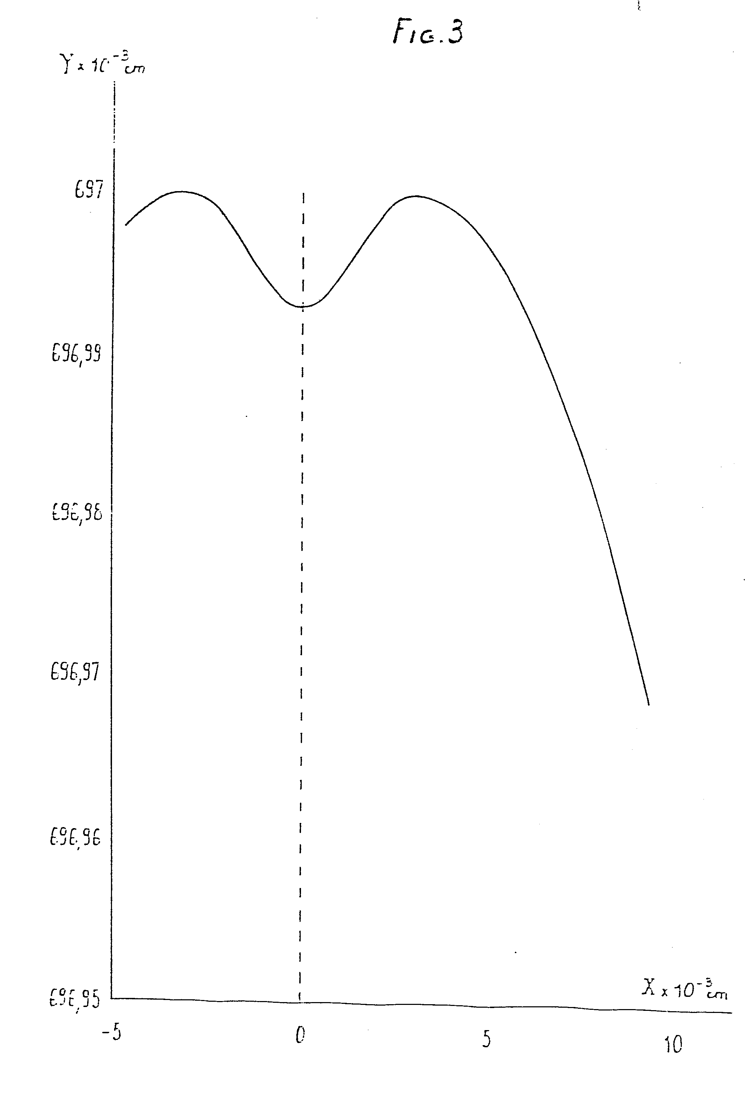

La fig. 3 montre une variante de la configuration de la face interne d'une lentille selon l'invention, à l'échelle. X et Y sont donnés en centième de millimètres. E a la valeur de $6 \times 10^{-3}$ cm et Ro de $697 \times 10^{-3}$ cm. L'axe de la lentille passe par le point O.

La lentille conforme à l'invention est alors fabriquée comme indiquée plus haut.

REVENDICATIONS

1 - Lentille de contact multifocale présentant une zone annulaire périphérique sphérique caractérisée en ce que la zone centrale multifocale pour la vision de près et la vision intermédiaire présente un bourrelet (5) sur la face interne (3) et/ou sur la face externe (2).

2 - Lentille de contact selon la revendication 1, caractérisée en ce que la courbure de la zone centrale pour la vision de près répond à la formule

$$Y = \frac{1}{2} \sqrt{4Ro^2 - E^2} + \left( \frac{Ro - \frac{1}{2}\sqrt{4Ro^2 - E^2}}{\sin\left(\frac{E\pi}{4}\right)} \right) \sin\left(\frac{\pi}{2} \cdot (X - \frac{E}{4})\right)$$

où Ro est le rayon principal de courbure de la face de la lentille où se trouve le bourrelet (5) et E la longueur du bourrelet.

3 - Procédé de fabrication d'une lentille selon l'une des revendications 1 ou 2, caractérisé en ce qu'on génère la zone périphérique de la face interne (3) et/ou de la face externe (2) correspondant à la vision de loin par pivotement de l'outil à couper (4) d'un tour, qu'on génère ensuite la zone centrale de la face interne (3) et/ou de la face externe (2) pour la vision de près par pivotement de la broche sur laquelle est monté le palet de matière servant à fabriquer la lentille puis on génère le bourrelet central (5) par pivotement de la broche supportant le palet servant à fabriquer la lentille.

4 - Procédé de fabrication d'une lentille selon l'une des revendications 1 ou 2, caractérisé en ce qu'on génère la zone périphérique de la face interne (3) et/ou de la face externe (2) correspondant à la vision de loin par pivotement de l'outil à couper (4) d'un tour, qu'on génère ensuite la zone centrale de la face interne (3) et/ou de la face externe (2) pour la vision de près par pivotement de la broche sur laquelle est monté le palet de matière servant à fabriquer la lentille puis on génère le bourrelet central (5) par pivotement de l'outil à couper autour d'un second pivot.

5 - Procédé de fabrication d'une lentille selon l'une des revendications 1 ou 2, caractérisé en ce que l'on utilise un tour pas-à-pas assisté par ordinateur, cette machine pouvant exécuter ses surfaces parfaitement définies par des courbes mathématiques.

6 - Procédé de fabrication d'une lentille selon l'une des revendications 1 ou 2, caractérisé en ce que l'on utilise un procédé par moulage afin d'obtenir des lentilles semi-finies.

Fig.1

Fig.2

Fig.3

Office européen
des brevets

**RAPPORT DE RECHERCHE EUROPEENNE**

**0232191**

Numéro de la demande

EP 87 40 0020

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| P,Y | EP-A-0 184 490 (F.D. VINZIA) <br> * Revendications * | 1,3 | G 02 C 7/06 |
| Y | FR-A-1 423 908 (LABORATOIRES YSOPTIC) <br> * En entier * | 1 | |
| A | DE-C- 748 575 (PAS DE SOCIETE INDIQUEE) <br> * Figure 4; page 1, ligne 52 - page 2, ligne 2 * | 1-2 | |
| A | US-A-1 735 758 (H.W. HILL) <br> * Revendications * | 1,2 | |
| A | US-A-1 647 721 (A.B. WELLS) <br> * Page 1, lignes 64-104 * | 1-2 | DOMAINES TECHNIQUES RECHERCHES (Int. Cl. 3) |
| | ----- | | G 02 C 7/06 <br> G 02 C 7/04 |

Le présent rapport de recherche a été établi pour toutes les revendications

| Lieu de la recherche | Date d'achèvement de la recherche | Examinateur |
|---|---|---|
| LA HAYE | 02-04-1987 | CALLEWAERT-HAEZEBROU |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82